# EUROPEAN PATENT SPECIFICATION

(11) **EP 0 753 921 B1**
(45) Date of publication and mention of the grant of the patent: **06.10.1999**
(21) Application number: 96111205.9
(22) Date of filing: 11.07.1996
(51) Int. Cl.: H02G 3/28, E04F 15/024

(54) **Free access floor**
Freizugänglicher Fussboden
Plancher à accès libre

(30) Priority: 14.07.1995 JP 20169895
(43) Date of publication of application: 15.01.1997
(73) Proprietor: HITACHI METALS TECHNO, LTD., Koto-ku, Tokyo-to (JP)
(72) Inventor: Yamamoto, Noriaki, c/o Hitachi Metals Techno, Ltd, Tokyo-to (JP); Saito, Yasushi, c/o Hitachi Metals Techno, Ltd, Tokyo-to (JP); Kobayashi, Atsuhiko, c/o Hitachi Metals Techno,Ltd, Tokyo-to (JP); Okamoto, Masashi, c/o Hitachi Metals Techno, Ltd, Tokyo-to (JP)
(74) Representative: Strehl Schübel-Hopf & Partner

(56) References cited:
- DE-A- 4 316 804
- US-A- 5 052 157
- PATENT ABSTRACTS OF JAPAN vol. 13, no. 582 (M-911), 21 December 1989 & JP-A-01 244062 (TAKENAKA KOMUTEN CO LTD), 28 September 1989,

## Description

### BACKGROUND OF THE INVENTION

### Field of the Invention

This invention relates to a free access floor. More particularly, the invention relates to a free access floor which is placed on a floor slab in such a manner as to allow space between the free access floor and the floor slab.

### Description of the Prior Art

Most modern office buildings employ a double-floor structure wherein a free access floor is positioned over a floor slab in such a manner that cables for services, such as electric power supply cables and telecommunication cables, can be laid freely in a desired location.

The conventional free access floor is comprised of a series of square floor panels generally arranged to form a square. Arranged vertically at the four corners of each floor panel are support legs. The floor panels are arranged so as to create an equal gap between corresponding adjacent floor panels. Rectangular plates are employed respectively to cover the gap between the adjacent sides of the two floor panels. Accordingly, the undersides of the rectangular plates are supported by the sides of the floor panels. Similarly, square plates are employed to cover the gap between the adjacent four corners of the four floor panels. The square plates are supported by the adjacent four corners of the four floor panels. Utilizing this structure, the above cables can be accommodated in the space under the rectangular plates and the square plates.

In the conventional free access floor, the rectangular plates and the square plates are respectively supported by the adjacent floor panels. Consequently, there is a basic difference in structure between the floor panels and the two varieties of plates. Therefore, because the two varieties of plates are structurally elementary in contrast to the floor panels which have a complex structure, total fabrication costs are significantly increased.

United States patent US-A-5 052 157 discloses a free access floor comprising a plurality of square floor panels, each provided with a continuous lip around its bottom perimeter, and a plurality of support legs, each provided on its top surface with cruciform grooves adapted to receive the lips on the panels.

It is the object of the present invention to provide a free access floor which is elementary in structure.

In accordance with the present invention, a free access floor as defined in the appended claim 1 is provided. The free access floor is placed on a floor slab in such a manner as to allow for space between the free access floor and the floor slab, effectively creating an area for laying cables, i.e., a cable passage. The cable passage includes at least one longitudinal passage and one traverse passage. The free access floor is comprised of a plurality of square floor panels and rectangular floor panels, each supported on a plurality of support legs. The longitudinal and traverse passages comprising the cable passage are formed beneath two rectangular floor panels which are positioned generally perpendicular to one another, connected by a square floor panels at the crossing region of the two rectangular floor panels.

The square floor panels, which may be formed of metal, have extension-parts respectively extending from four sides thereof, with each extension-part bent downward to form a rib so that each square floor panel assumes a square shape in a plane. Of course, the square floor panels may be formed of any material capable of withstanding the loads associated with a free access floor.

Likewise, the rectangular floor panels are formed of metal, each having extension-parts extending from the four sides thereof, with each extension-part bent downward to form a rib so that each rectangular floor panel assumes a rectangular shape in a plane. The rectangular floor panel has two short sides whose length is equal to one side of the square floor panel and two long sides whose length is equal to the length of two sides of the square floor panel or another multiple thereof. Of course, the absolute dimensions of the rectangular floor panels could be of any magnitude. Again, the rectangular floor panels may be formed of any material capable of withstanding the loads associated with a free access floor.

In an effort to support the square and rectangular floor panels, a plurality of support legs are provided. Each support leg has fitting grooves on a top face thereof and reside where the corners of the floor panels come together.

The free access floor is assembled as follows. The square floor panels are placed at the crossing regions of the rectangular floor panels which comprise the longitudinal and traverse passages of the cable passage. In other words, some of the rectangular floor panels are placed in two opposing, generally perpendicular, directions along the cable passage, separated at the crossing regions by a square floor panel. Rectangular floor panels are placed in the remaining regions surrounding the crossing regions. Of course, the square and rectangular floor panels may be positioned in any formation so as to allow for a cable passage. The ribs of the floor panels are respectively inserted into the fitting grooves of the support legs so that the floor panels are supported by the top faces of the support legs.

According to the present invention, the free access floor is comprised of three kinds of members: square floor panels, rectangular floor panels, and support legs. Because the square and rectangular floor panels encompass nearly the same configuration, which stems from the fact that the length of a long side of a rectangular floor panel is merely a multiple of the length of one side of a square floor panel, the invention successfully provides a free access floor elementary in structure.

Although the square and rectangular floor panels are easily formed by bending a metallic plate, they are able to maintain sufficient strength by the provision of ribs. Moreover, because the ribs are inserted into the fitting grooves of the support legs, the corresponding square and rectangular floor panels are precluded from shifting or moving. Moreover, the ability to alter the positioning of the floor panels allows the present invention to cope flexibly with the re-routing of a particular cable passage.

### BRIEF DESCRIPTION OF THE DRAWINGS

Fig. 1 is a partially cut-away plan view which illustrates a free access floor in accordance with one embodiment of the present invention;
Fig. 2 is a plan view which illustrates a square floor panel;
Fig. 3 is a plan view which illustrates a rectangular floor panel;
Fig. 4(A) is a plan view which illustrates a support leg;
Fig. 4(B) is a front view which illustrates a support leg;
Fig. 5 is a plan view which illustrates the position of the support legs in a border of the free access floor and a means of drawing a small diameter cable out of the floor;
Fig. 6 is a plan view which illustrates another embodiment of a support leg;
Fig. 7 is a plan view which illustrates a means of drawing a large diameter cable out of the floor in area A shown in Fig. 5;
Fig. 8 is a plan view which illustrates a means of drawing a large diameter cable out of the floor in area B shown in Fig. 5;
Fig. 9 is a plan view which illustrates another free access floor in which the pitch and width of the cable passage are modified;
Fig. 10 is a plan view which illustrates yet another embodiment of the support leg;
Fig. 11 is a cross sectional view taken on line A-A in Fig. 10;
Fig. 12 is a cross sectional view taken on line B-B in Fig. 10;
Fig. 13 is a plan view which illustrates a buffer member of a support leg;
Fig. 14 is a longitudinal cross sectional view of the buffer member shown in Fig. 13;
Fig. 15 is a plan view which illustrates buffer members and connecting members for support legs;
Fig. 16 is a plan view which illustrates another embodiment of a square floor panel.

### DETAILED DESCRIPTION OF THE PREFERRED EMBODIMENT

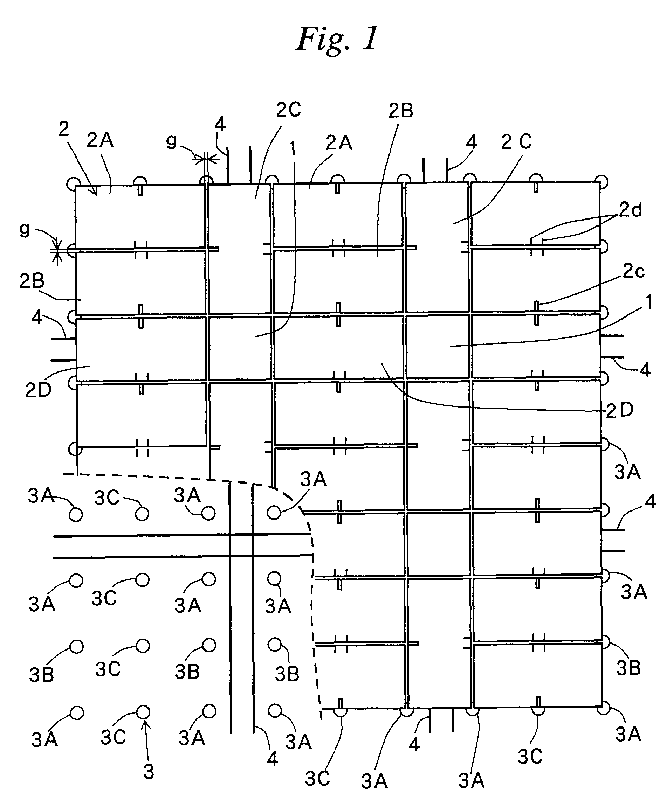

The present invention will now be explained with reference to the drawings. Fig. 1 illustrates a free access floor in accordance with one embodiment of the present invention. The free access floor is positioned on a floor slab allowing for space between the floor and the floor slab so as to form a cable passage for placing various cables in the space formed therebetween.

The free access floor is comprised of a plurality of square floor panels 1, a plurality of rectangular floor panels 2 (2A∼2D), and a plurality of support legs 3 (3A∼3C) for supporting the floor panels 1, 2. The square floor panel 1 is formed to assume a square shape in a plane. Similarly, the rectangular floor panel 2 (2A∼2D) is formed to assume a rectangular shape in a plane. Each rectangular floor panel 2 has a short side whose length is equal to one side of the square floor panel 1 and a long side whose length is substantially twice the length of one side of the square floor panel 1 or a multiple thereof. The floor panels 1, 2 are positioned above a floor slab. More particularly, the floor panels 1, 2 are positioned such that a slight gap g is formed therebetween, so that the long side of the rectangular floor panel 2 has a length twice as long as one side of the square floor panel 1 plus the gap g. Conversely, the floor panels 1, 2 may be positioned in close proximity to each other without providing for a gap g therebetween. Moreover, the rectangular floor panels 2 may be fabricated so as to incorporate long sides whose length is greater than twice the length of one side of the square panel, for example, three times as long as one side.

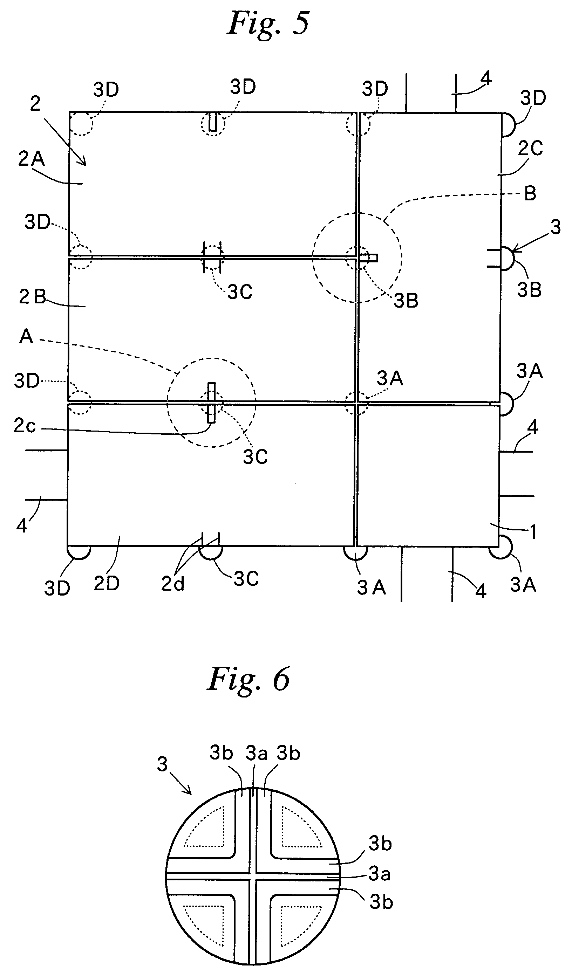

Referring to Fig. 5, the square floor panels 1 are placed at the crossing regions of the rectangular floor panels 2 which comprise the longitudinal and traverse passages of the cable passage 4. In other words, some of the rectangular floor panels 2 (2C, 2D) are placed in the two opposing, generally perpendicular, directions along the cable passage. Two rectangular floor panels 2 (2A, 2B) are respectively placed in the square regions encompassed by the above some of the rectangular floor panels 2 (2C, 2D) and the square floor panels 1. That is, the rectangular floor panels 2 are employed both in the regions along the cable passage and in the other regions.

In Fig. 1, all of the rectangular floor panels 2 (2A, 2B) are arranged such that a gap g is formed between the long side of rectangular floor panel 2B and the long side of rectangular floor panel 2D. The rectangular floor panel 2A and 2B may also be oriented such that a long side of rectangular floor panel 2B (or 2A) runs parallel to a long side of rectangular floor panel 2C. Moreover, a combination of traverse and longitudinal arrangements may be utilized. In the present embodiment, if the length of one side of the square floor panel 1 is defined as one pitch, the traverse passage and the longitudinal passage are provided respectively by every three pitches in a front-and-rear direction and a left-and-right direction (see Fig. 1).

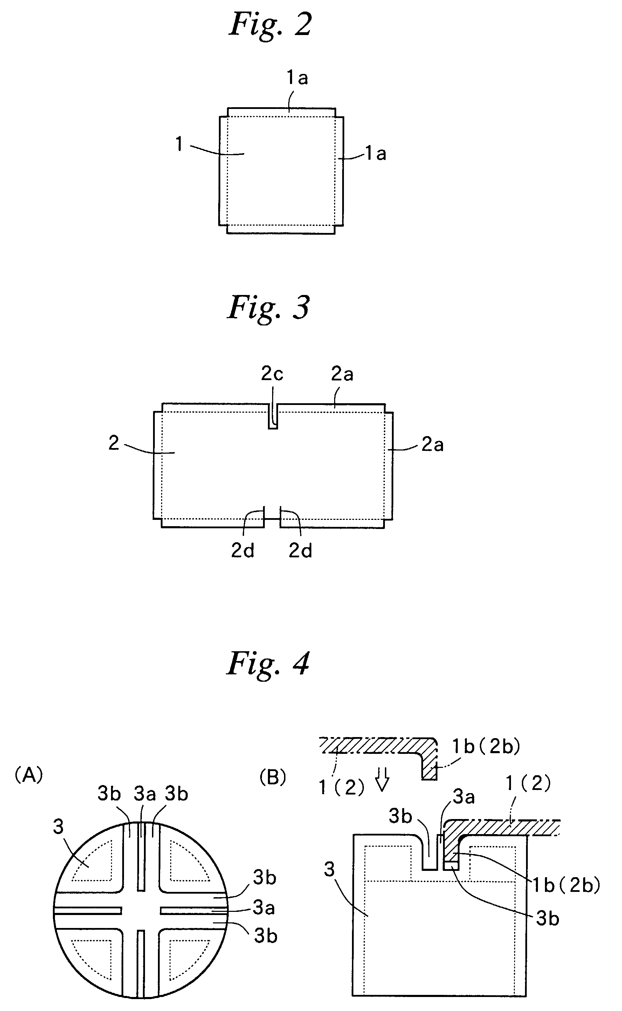

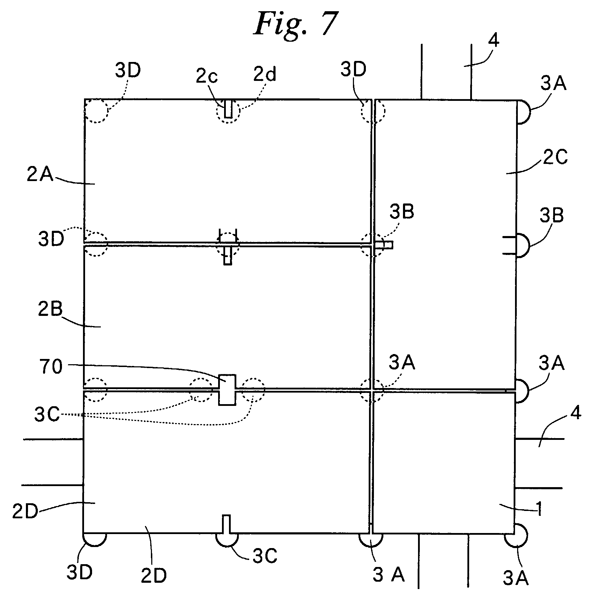

The square floor panel 1 consists of a metallic plate which has extension-parts 1a respectively extending from the four sides thereof, as shown in Fig. 2. The extension-parts 1a can be bent downward to form ribs 1b (see Fig. 4(B)) so that the square panel 1 assumes a square shape in a plane, as shown by the dotted line in Fig. 2. Utilizing such a configuration allows one to easily fabricate the square panel 1. Similarly, as illustrated in Fig. 3, the rectangular floor panel 2 (2A ∼ 2D) is a metallic plate having extension-parts 2a respectively extending from the four sides thereof. The extension-parts 2a can be bent downward to form ribs 2b (see Fig. 4(B)) so that the rectangular floor panel 2 assumes a rectangular shape in a plane, as shown by the dotted line in Fig. 3. The rectangular floor plate 2 includes one long side having a cable-passing recess 2c in the middle thereof, and another long side having a pair of slits 2d in the middle thereof. By bending downward the portion between the pair of slits 2d, 2d, a cable-passing opening 70 (illustrated in Fig. 7) is formed.

Referring to Figs. 4(A) and 4(B), the support leg 3 consists of a capped cylinder which has a cross-shaped groove on the top face thereof. Four spacers 3a are projected vertically along the center-line in the four grooves comprising the cross-shaped groove, and terminate prior to intersecting one another. Thereby, a fitting groove 3b is formed on both sides of four spacers 3a, respectively.

The support legs may be designated 3A, 3B, 3C, or 3D depending upon their relative position in relation to the floor panels 1,2 (see Figs. 1 and 5). Support legs 3A are placed at the position where the corners of four floor panels 1,2 (2C, 2D) converge. In the case of the support legs 3 employed at the areas where the corners of four floor panels 1,2 converge, the spacers 3a of the support legs 3 may intersect one another, as shown in Fig. 6. Support legs 3B are positioned where the corners of two rectangular floor panels 2 (2A, 2B) and the middle section of a long side of rectangular floor panel 2C converge. Support legs 3C are placed where the middle sections of two adjacent long sides of the rectangular floor panels 2 (2A, 2B, 2D) run parallel. In this manner, the support legs 3 are positioned such that the distance between any two adjacent support legs 3 is substantially equal to the length of one side of a square floor panel 1.

It is noted that along the border portion of the free access floor, support legs 3D are positioned such that they do not protrude beyond the sides of the floor panel 2, as shown in Fig. 5 In this case, it is desirable for support legs 3D to be secured to the underside of the floor panels 2 by applying adhesive or the like.

Besides, the spacers 3a of the support leg 3 are provided independent in this embodiment as shown in Fig. 4(A). However, in the case of the support legs 3 employed at the areas where the corners of four floor panels 1, 2 gather, the spacers 3a of the support legs 3 may be formed in a cross shape, as shown in Fig. 6.

The floor panels 1, 2 are positioned atop the support legs 3 by fitting the corresponding ribs 1b, 2b into the respective fitting grooves 3b of a particular support leg 3, as illustrated in Fig. 4B. The ribs 1b, 2b serve the dual function of reinforcing and positioning the floor panel 1, 2. However, the ribs 1b, 2b do not make contact with the bottom face of the fitting groove 3b, as shown in Fig. 4(B). In other words, the ribs 1b, 2b do not function as a means of supporting the floor panel 1, 2. Instead, each one of the floor panels 1, 2 is supported by the top face of the corresponding support legs 3.

In the present embodiment, the spacers 3a of the support leg 3 prevent the occurrence of an abnormal sound created by the abutment of adjacent ribs 1b, 2b. However, it is also possible to configure the support leg 3 without employing the spacers 3a.

As previously stated, a cable-passing recess 2c is formed in the center of one of the long sides of each rectangular floor panels 2 (2A ∼ 2D). Referring to Fig. 5, some of the support legs 3 are positioned under the cable-passing recesses 2c. The length of the cable-passing recess 2c is configured such that a portion is not covered by the support leg 3. It is therefore possible to pass a cable through the uncovered opening of the cable-passing recess 2c in order to draw the cable from under the floor panels 2.

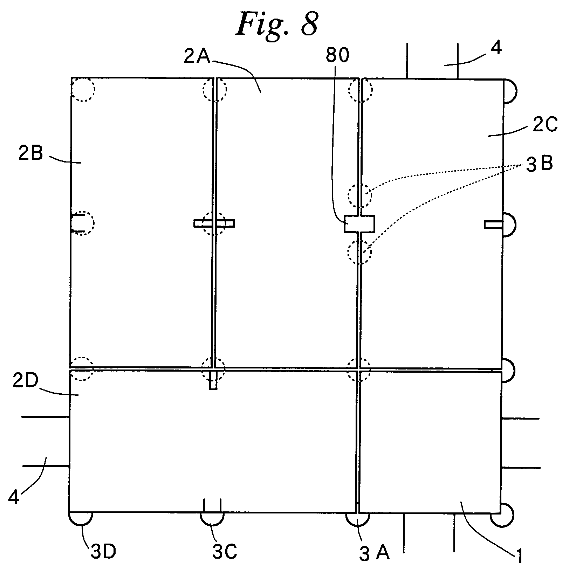

In the case of drawing a big diameter cable out of the adjacent portion of two rectangular floor panels 2 (2B, 2D) in the area A shown in Fig. 5, the two floor panels 2B, 2D are placed such that each pair of slits 2d, 2d of the two floor panels 2B, 2D coincide with each other in the area A. Thereafter, by pressing the portion residing between each pair of slits 2d, 2d of the two floor panels 2B, 2D downward, a big cable-passing opening 70 is provided in the area A, as shown in Fig. 7. In the case of drawing a middle diameter cable out of the adjacent portion of two rectangular floor panels 2 in the area A shown in Fig. 5, the two floor panels 2B, 2D may be positioned such that a cable-passing recess 2c of one of the floor panels 2B, 2D and a pair of slits 2d, 2d of the other floor panels 2B, 2D coincide with each other in the area A. Thereafter, by pressing downward the portion between the pair of slits 2d, 2d, a middle cable-passing opening having approximately half the size of the big cable-passing opening 70 is provided in the area A. Additionally, in the case of drawing a big diameter cable out of the adjacent portion of three rectangular floor panels 2 (2A, 2B, 2D) in the area B shown in Fig. 5, it is necessary to place two floor panels 2A, 2B longitudinally and place two floor panels 2A, 2C such that each pair of slits 2d of the two floor panels 2A, 2C coincide with each other in the area B. Thereafter, by pressing downward the portion between each pair of slits 2d, 2d of the two floor panels 2A, 2C, a big cable-passing opening 80 is provided in the area B, as shown in Fig. 8.

When circumstances dictate that a big cable-passing opening 70, 80 is required, the support leg 3 must be re-positioned, since one support leg 3 is positioned immediately under the above opening 70, 80, effectively obstructing the opening 70, 80. Therefore, two support legs 3, 3 are provided on both sides of the opening 70, 80, as illustrated in Figs. 7 and 8.

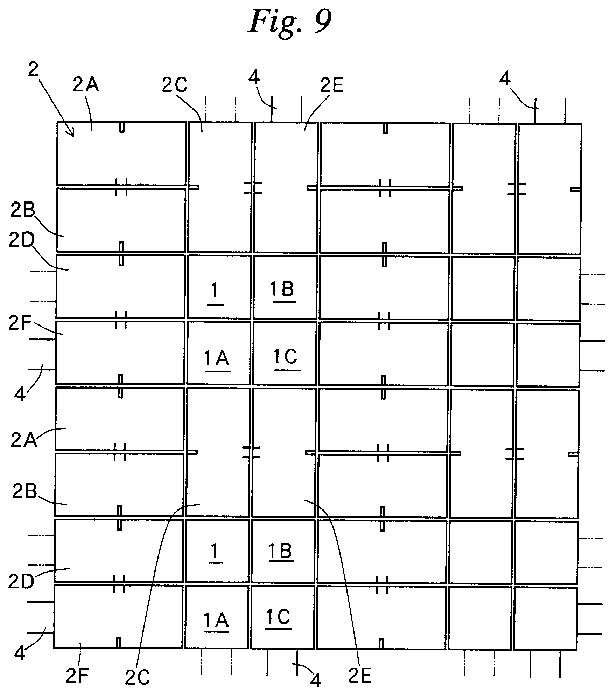

According to the present embodiment shown in Fig. 1, the cable passage for cables 4 is provided with a width of one pitch by every three pitches respectively in a front-and-rear direction and a left-and-right direction, as stated above. However, the width and the pitch of the cable passage can be altered as desired by placing the floor panels 1, 2 appropriately. One embodiment is shown in Fig. 9, wherein a cable passage is formed under the rectangular floor panels 2E, 2F and the square floor panels 1A∼1C. A cable passage is provided having a width equal to one pitch by every four pitches respectively in a front-and-rear direction and a left-and-right direction. This embodiment accommodates for an increase in cables by providing a cable passage width equal to two pitches. According to this embodiment, it is possible to cope easily with the increase of the cables.

Accordingly, the present embodiment provides a flexible free access floor by employing square floor panels 1 and rectangular floor panels 2, both of which are simple in structure, and support legs 3 which can be easily produced of resin or the like. Moreover, it is possible to adjust the height of the floor solely by altering the length of the support legs 3. In this respect, the present embodiment can provides a high flexibility of a free access floor. In addition, because all of the floor panels 1, 2 are connected by the support legs 3, a united and stable free access floor is obtained, precluding the floor from shifting or moving after placement. Further, large areas are provided under the floor panels 2 in regions except the cable passage. For example, large areas are provided under the floor panels 2A, 2B except the cable passage formed under the floor panels 2C, 2D and 1. It is therefore possible to conveniently accommodate the remainder of the cable 4.

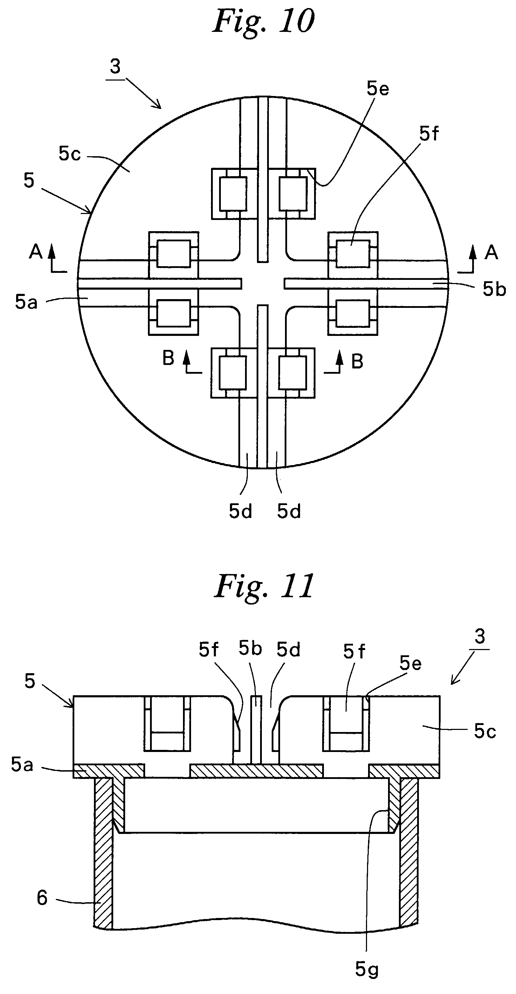

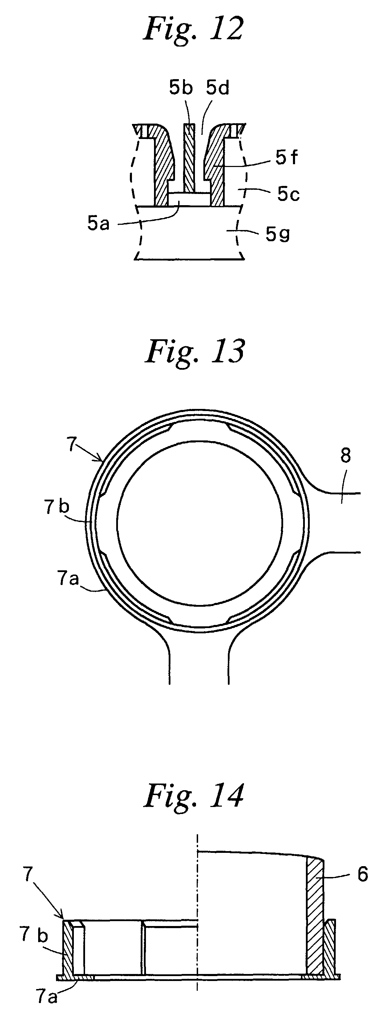

Figs. 10 to 12 show another example of a support leg 3. The support leg 3 comprises a cap 5 and a pipe 6, wherein a buffer member 7 is attached to a lower end of the pipe 6 (see Figs. 13 and 14). The cap 5 is formed of resin, and comprises a base plate 5a and four spacers 5b extending vertically therefrom. The base plate 5a has four sector portions 5c extending vertically from the base plate 5a to the top face thereof, thereby providing a fitting groove 5d between each one of the sector portions 5c and the corresponding spacer 5b. Each one of the sector portions 5c has a cutout portion 5e formed respectively at the middle of the two perpendicular inner end faces thereof. A forcing portion 5f is provided in each one of the cutout portions 5e, as shown in Fig. 10. The front face of the forcing portion 5f projects into the fitting groove 5d, and the forcing portion 5f is connected to the inner side wall of sector portion 5c at the opposite sides of the lower end thereof, as shown in Figs. 11 and 12. Each forcing portions 5f is elastically deformable, so that when the ribs 1b, 2b of the floor panels 1, 2 are press-fit into the respective fitting grooves 5d, the floor panels 1, 2 are tightly secured to the cap 5. The base plate 5a of the cap 5 has a cylindrical portion 5g extending vertically from the underside of the base plate 5a which is press-fit into the pipe 6.

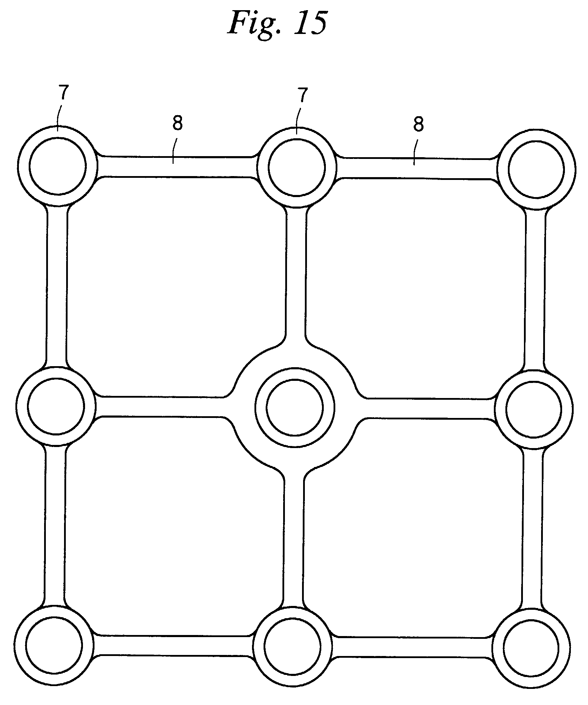

A buffer member 7 is provided under each of the support legs 3. The buffer member 7 comprises a base plate 7a and a cylindrical portion 7b vertically extending from the base plate 7a, as shown in Figs. 13 and 14. The pipe 6 is received in the cylindrical portion 7b of the buffer member 7. In addition, as illustrated in Fig. 15, nine buffer members 7 may be connected with each other through connecting members 8 in a matrix form.

As stated above, the support leg 3 incorporates a pipe 6 as its support structure. Therefore, the height of the free access floor can be easily adjusted simply by changing the length of the pipes 6. Moreover, the pipe 6 is not limited to a cylindrical pipe. For example, a rectangular cylinder can be used. Because the cap 5 formed of resin intervenes between the pipe 6 and the floor panels 1, 2, and the buffer member 7 intervenes between the pipe 6 and the floor slab, abnormal sound which may emanate upon walking on the floor panel 1, 2, is significantly suppressed. Additionally, providing the caps 5 with forcing portions 5f greatly facilitates attaching the floor panels to the caps 5.

In the present embodiment, the ribs 1b, 2b of the floor plates 1, 2 are secured into the corresponding fitting grooves 5d of the caps 5. Likewise, this configuration is amenable to securing a stile or a sloped member into the fitting grooves 5d of the caps 5, thereby simplifying the structure of the stile or the sloped member. Because the buffer members 7 are primarily provided beneath the pipes 6, the contact area between the buffer members 7 and the floor slab is small. Therefore, it is possible to easily cope with the problem of waving or uneven floor slab surfaces.

The floor panels 1, 2 and the support legs 3 are united by the connecting members 8. The connecting members 8 serve to facilitate the placement of the floor panels 1, 2 and enhance convenient transportation. Also, it is able to cut a part of the connecting members 8 and place the cut part under the floor panels 1, 2 at appropriate positions. Therefore, it is able to easily reinforce the supporting of the floor panels 1, 2.

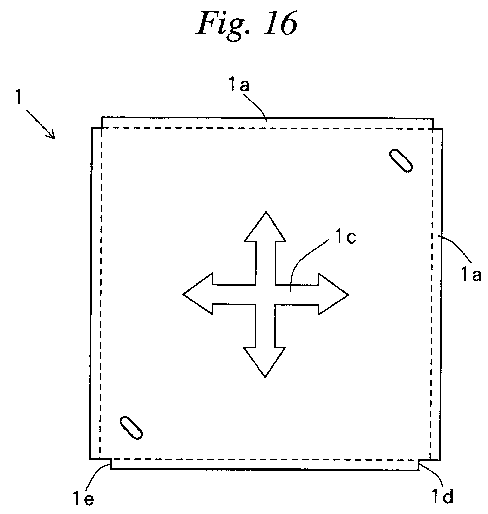

Fig. 16 shows another example of the square floor panel 1, wherein a cross-shaped cable-direction mark 1c is provided in the middle of the top face of the square floor panel 1. The cable-direction mark 1c allows one to easily recognize the direction of cables 4.

In this embodiment, each square floor panels 1 includes a right cutout 1d and a left cutout 1e provided at opposite ends of one extension-part 1a thereof. When two square floor panels 1 are oriented so that their respective undersides face each other, the left and right ribs 1b of one square floor panel 1 respectively fit into the right and left cutouts 1d, 1e of the other square floor panel 1. Accordingly, the resultant thickness of the two stacked panels is greatly reduced. Such a configuration decrease the volume of the square floor panels 1 in transportation and facilitate the handling. Similar cutouts may be utilized with a rectangular floor panel 2. It so doing, it is sufficient to provide one right cutout 1d at the right end of any one of four fibs and one left cutout 1e at the left end of any one of four ribs. However, it is also possible to provide two cutouts 1d, 1e on all four ribs. Because the end portions of the floor panels 1, 2 are supported on the top faces of the support legs 3, the structural integrity of the free access floor is not compromised.

## Claims

1. A free access floor for being positioned over a floor slab to allow for space between the free access floor and the floor slab and form a cable passage for laying cables in said space, said cable passage including at least one longitudinal passage and at least one traverse passage, comprising:
a plurality of square floor panels (1) having extension-parts (1a) extending from each side of the panel, said extension-parts (1a) being configured so as to be bent downwardly from a top surface of said square floor panel (1) to form ribs (1b);
a plurality of rectangular floor panels (2) having extension-parts (2a) extending from each side of the panel, said extension-parts (2a) being configured so as to be bent downwardly from a top surface of said rectangular floor panel (2) to form ribs (2b);
each of said plurality of rectangular floor panels (2) having two short sides, each said short side having a length substantially equal to the length of one side of said square floor panel (1), and two long sides, each said long side having a length substantially equal to a multiple of the length of one side of said square floor panel (1);
a plurality of support legs (3) for supporting said square floor panels (1) and said rectangular floor panels (2), said support legs (3) having fitting grooves (3b, 5d) on a top face thereof, each said support leg being configured to fit where the corners of said floor panels converge;
each said square floor panels (1) being placed at the crossing region of said longitudinal passage and said traverse passage, said rectangular floor panels (2) being placed in regions other than said crossing regions;
and
wherein said ribs (1b; 2b) of said floor panels (1; 2) are placed in the fitting grooves (3b; 5d) of said support legs (3) so that said floor panels are supported by said top faces of said support legs.

2. A free access floor according to claim 1, further comprising a plurality of other support legs (3) for supporting said rectangular floor panels (2), said other support legs (3) having fitting grooves (3b; 5d) on a top face thereof, each said other support leg being placed in the middle of the sections where said long sides of two rectangular floor panels are adjacent.

3. A free access floor according to claim 1, wherein each of said fitting grooves (5d) has a forcing portion (5f) projecting therein, said forcing portion (5f) being elastically deformable by said corresponding rib (1b; 2b) of said floor panel (1; 2) when said rib is press-fit into said fitting groove (5d).

4. A free access floor according to claim 1, wherein said fitting grooves (3b) of said support legs (3) converge to form a cross shape groove, each of said fitting grooves (3b) having a spacer (3a) provided in the center portion thereof, said spacer (3a) terminating at a central portion of said support leg prior to intersecting another spacer in the crossing area of said cross shape groove, said spacer (3a) preventing adjacent ribs (1b; 2b) of said floor panels (1; 2) from coming into contact with one another.

5. A free access floor according to claim 1, wherein said support leg (3) comprises a cap (5) having a cylinder (5g) extending vertically therefrom, a pipe (6) fitted to said cylinder (5g) and a buffer member (7) placed under each pipe (6) of said support leg (3).

6. A free access floor according to claim 5, wherein at least two of said buffer members (7) are interconnected.

7. A free access floor according to claim 1, wherein each one of said rectangular floor panels (2) has a cable-passing recess (2c) in the middle of a long side thereof.

8. A free access floor according to claim 7, wherein the length of said cable-passing recesses (2c) is greater than the diameter of said support leg (3) such that when said support leg (3) is placed under said cable-passing recess (2c), said recess is not covered by said support leg.

9. A free access floor according to claim 1, wherein two slits (2d) are formed in the middle of a long side of each of said rectangular floor panels (2), the portion between said two slits (2d) being configured so as to be bent downwardly from a top surface of said rectangular floor panel (2) to form an opening (70) for passing a cable therethrough.

10. A free access floor according to claim 1, wherein at least one of said square floor panels has a cross-shape cable-direction mark on a top face thereof.

11. A free access floor according to claim 1, wherein said square floor panel (1) includes a cutout portion (ld; le) on one of said corresponding ribs (1b).

12. A free access floor according to claim 1, wherein said rectangular floor panel (2) includes a cutout portion on one of said corresponding ribs (2b).

## Patentansprüche

1. Frei zugänglicher Boden zum Verlegen über einer Bodenplatte, um zwischen dem frei zugänglichen Boden und der Bodenplatte Raum zu schaffen und in diesem einen Kabelkanal zum Verlegen von Kabeln auszubilden, wobei der Kabelkanal mindestens einen Längskanal und mindestens einen Querkanal umfaßt, mit
mehreren quadratischen Bodenpaneelen (1), die an jeder Seite einen von ihrer oberen Fläche unter Bildung einer Rippe (1b) nach unten zu kantenden Ansatz (1a) aufweisen,
mehreren rechteckigen Bodenpaneelen (2), die an jeder Seite einen von ihrer oberen Fläche unter Bildung einer Rippe (2b) nach unten zu kantenden Ansatz (2a) aufweisen,
wobei jede der rechteckigen Bodenpaneele (2) zwei kurze Seiten einer Länge, die im wesentlichen gleich der Länge einer Seite des quadratischen Bodenpaneels (1) ist, sowie zwei lange Seiten einer Länge aufweist, die im wesentlichen gleich einem Vielfachen der Länge einer Seite des quadratischen Bodenpaneels (1) ist,
mehreren Stützbeinen (3) zur Abstützung der quadratischen und der rechteckigen Bodenpaneele (1, 2), wobei die Stützbeine (3) an ihrer oberen Fläche Paßnuten (3b, 5d) aufweisen und jedes Stützbein so gestaltet ist, daß es an die Stelle paßt, wo die Ecken der Bodenpaneele zusammentreffen,
wobei jedes der quadratischen Bodenpaneele (1) im Kreuzungsbereich der Längs- und Querkanäle angeordnet ist und die rechteckigen Bodenpaneele (2) in von den Kreuzungsbereichen verschiedenen Bereichen angeordnet sind, und
wobei die Rippen (1b; 2b) der Bodenpaneele (1; 2) in die Paßnuten (3b; 5d) der Stützfüße (3) derart eingefügt sind, daß die Bodenpaneele von den oberen Flächen der Stützbeine getragen werden.

2. Frei zugänglicher Boden nach Anspruch 1 mit mehreren weiteren Stützbeinen (3) zum Abstützen der rechteckigen Bodenpaneele (2), wobei die weiteren Stützbeine (3) an ihren oberen Flächen Paßnuten (3b; 5d) aufweisen und jeweils in der Mitte der Bereiche angeordnet sind, in denen die Längsseiten zweier rechteckiger Bodenpaneele benachbart sind.

3. Frei zugänglicher Boden nach Anspruch 1, wobei jede der Paßnuten (5d) einen einspringenden Druckteil (5f) aufweisen, der von der betreffenden Rippe (1b; 2b) des Bodenpaneels (1; 2) elastisch deformierbar ist, wenn die Rippe im Preßsitz in die Paßnut (5d) eingreift.

4. Frei zugänglicher Boden nach Anspruch 1, wobei die Paßnuten (3b) der Stützbeine (3) unter Bildung einer kreuzförmigen Nut zusammenlaufen und jede der Paßnuten (3b) in ihrem mittleren Teil ein Abstandselement (3a) aufweist, das an einem Mittelteil des Stützbeins vor der Überschneidung mit einem anderen Abstandselement im Kreuzungsbereich der kreuzförmigen Nut endet und verhindert, daß benachbarte Rippen (1b; 2b) der Bodenpaneele (1; 2) einander berühren.

5. Frei zugänglicher Boden nach Anspruch 1, wobei das Stützbein (3) eine Kappe (5) mit einem vertikal von dieser ausgehenden Zylinder (5g), ein an den Zylinder (5g) angesetztes Rohr (6) und ein unter jedem Rohr (6) des Stützbeins (3) angeordnetes Pufferelement (7) aufweist.

6. Frei zugänglicher Boden nach Anspruch 5, wobei mindestens zwei Pufferelemente (7) miteinander verbunden sind.

7. Frei zugänglicher Boden nach Anspruch 1, wobei jedes der rechteckigen Bodenpaneele (2) in der Mitte einer seiner Längsseiten eine Aussparung (2c) zur Kabeldurchführung aufweist.

8. Frei zugänglicher Boden nach Anspruch 7, wobei die Länge der Aussparung (2c) der Kabeldurchführung größer ist als der Durchmesser des Stützbeins (3), so daß dann, wenn das Stützbein (3) unter der Aussparung (2c) angeordnet ist, diese von dem Stützbein nicht überdeckt wird.

9. Frei zugänglicher Boden nach Anspruch 1, wobei in der Mitte einer Längsseite jedes der rechteckigen Bodenpaneele (2) zwei Schlitze (2d) ausgebildet sind und der Abschnitt zwischen den beiden Schlitzen (2d) so gestaltet ist, daß er sich von der oberen Fläche des rechteckigen Bodenpaneels (2) unter Bildung einer Öffnung (70) zur Durchführung eines Kabels nach unten kanten läßt.

10. Frei zugänglicher Boden nach Anspruch 1, wobei mindestens eines der quadratischen Bodenpaneele an seiner oberen Fläche eine kreuzförmige Kabelrichtungsmarkierung trägt.

11. Frei zugänglicher Boden nach Anspruch 1, wobei das quadratische Bodenpaneel (1) an einer der entsprechenden Rippen (1b) einen Ausschnitt (1d; 1e) aufweist.

12. Frei zugänglicher Boden nach Anspruch 1, wobei das rechteckige Bodenpaneel (2) an einer der entsprechenden Rippen (2b) einen Ausschnitt aufweist.

## Revendications

1. Plancher à accès libre destiné à être positionné au-dessus d'une dalle de plancher pour permettre à un espace entre le plancher à accès libre et la dalle de plancher de former un passage de câbles pour disposer des câbles dans ledit espace, ledit passage de câbles comprenant au moins un passage longitudinal et au moins un passage transversal, comprenant :
une pluralité de panneaux de plancher carrés (1) comportant des parties d'extension (la) s'étendant depuis chaque côté du panneau, lesdites parties d'extension (la) étant configurées de façon à être incurvées vers le bas à partir d'une surface supérieure dudit panneau de plancher carré (1) de façon à former des nervures (1b) ;
une pluralité de panneaux de plancher rectangulaires (2) comportant des parties d'extension (2a) s'étendant depuis chaque côté du panneau, lesdites parties d'extension (2a) étant configurées de façon à être incurvées vers le bas à partir d'une surface supérieure dudit panneau de plancher rectangulaire (2) de façon à former des nervures (2b) ;
chacun de ladite pluralité de panneaux de plancher rectangulaires (2) comportant deux côtés courts, chacun desdits côtés courts ayant une longueur sensiblement égale à la longueur d'un côté dudit panneau de plancher carré (1), et deux côtés longs, chacun desdits côtés longs ayant une longueur sensiblement égale à un multiple de la longueur d'un côté dudit panneau de plancher carré (1) ;
une pluralité de pattes de support (3) pour supporter lesdits panneaux de plancher carrés (1) et lesdits panneaux de plancher rectangulaires (2), lesdites pattes de support (3) comportant des rainures de fixation (3b, 5d) sur une surface supérieure de celles-ci, chacune desdites pattes de support étant configurée de façon à s'adapter là où convergent les coins desdits panneaux de plancher ;
chacun desdits panneaux de plancher carrés (1) étant disposé au niveau de la région de croisement dudit passage longitudinal et dudit passage transversal, lesdits panneaux de plancher rectangulaires (2) étant disposés dans des régions autres que lesdites régions de croisement ; et
dans lequel lesdites nervures (1b ; 2b) desdits panneaux de plancher (1 ; 2) sont disposées dans les rainures de fixation (3b ; 5d) desdites pattes de support (3) de telle sorte que lesdits panneaux de plancher soient supportés par lesdites faces supérieures desdites pattes de support.

2. Plancher à accès libre selon la revendication 1, comprenant de plus une pluralité d'autres pattes de support (3) pour supporter lesdits panneaux de plancher rectangulaires (2), lesdites autres pattes de support (3) comportant des rainures de fixation (3b ; 5d) sur une face supérieure de celles-ci, chacune desdites autres pattes de support étant disposée au milieu des sections où lesdits côtés longs de deux panneaux de plancher rectangulaires sont adjacents.

3. Plancher à accès libre selon la revendication 1, dans lequel chacune desdites rainures de fixation (5d) comporte une partie de forçage (5f) faisant saillie à l'intérieur de celle-ci, ladite partie de forçage (5f) étant élastiquement déformable par ladite nervure correspondante (1b ; 2b) dudit panneau de plancher (1 ; 2) lorsque ladite nervure est fixée par pression dans ladite rainure de fixation (5d).

4. Plancher à accès libre selon la revendication 1, dans lequel lesdites rainures de fixation (3b) desdites pattes de support (3) convergent de façon à former une rainure en forme de croix, chacune desdites rainures de fixation (3b) comportant un dispositif d'espacement (3a) disposé dans la partie centrale de celle-ci, ledit dispositif d'espacement (3a) s'achevant au niveau d'une partie centrale de ladite patte de support avant de croiser un autre dispositif d'espacement dans la zone de croisement de ladite rainure en forme de croix, ledit dispositif d'espacement (3a) empêchant des rainures adjacentes (1b ; 2b) desdits panneaux de plancher (1 ; 2) de venir en contact l'une avec l'autre.

5. Plancher à accès libre selon la revendication 1, dans lequel ladite patte de support (3) comprend un couvercle (5) comportant un cylindre (5g) qui s'étend verticalement à partir de celui-ci, un tuyau (6) fixé sur ledit cylindre (5g) et un élément de tampon (7) disposé sous chaque tuyau (6) de ladite patte de support (3).

6. Plancher à accès libre selon la revendication 5, dans lequel au moins deux desdits éléments de tampon (7) sont interconnectés.

7. Plancher à accès libre selon la revendication 1, dans lequel chacun desdits panneaux de plancher rectangulaires (2) comporte une cavité de passage de câbles (2c) dans le milieu d'un côté long de celui-ci.

8. Plancher à accès libre selon la revendication 7, dans lequel la longueur desdites cavités de passage de câbles (2c) est supérieure au diamètre de ladite patte de support (3), de telle sorte que, lorsque ladite patte de support (3) est disposée sous ladite cavité de passage de câbles (2c), ladite cavité ne soit pas recouverte par ladite patte de support.

9. Plancher à accès libre selon la revendication 1, dans lequel deux fentes (2d) sont formées dans le milieu d'un côté long de chacun desdits panneaux de plancher rectangulaires (2), la partie entre lesdites deux fentes (2d) étant configurée de façon à être incurvée vers le bas à partir d'une surface supérieure dudit panneau de plancher rectangulaire (2) de façon à former une ouverture (70) pour faire passer un câble à travers celle-ci.

10. Plancher à accès libre selon la revendication 1, dans lequel au moins l'un desdits panneaux de plancher carrés comporte un repère de direction de câbles en forme de croix sur une surface supérieure de celui-ci.

11. Plancher à accès libre selon la revendication 1, dans lequel ledit panneau de plancher carré (1) comporte une partie entaillée (1d ; 1e) sur l'une desdites nervures correspondantes (1b).

12. Plancher à accès libre selon la revendication 1, dans lequel ledit panneau de plancher rectangulaire (2) comporte une partie entaillée sur l'une desdites nervures correspondantes (2b).
